# EUROPÄISCHE PATENTSCHRIFT

(11) **EP 3 535 486 B1**
(45) Veröffentlichungstag und Bekanntmachung des Hinweises auf die Patenterteilung: **05.07.2023**
(21) Anmeldenummer: 17780079.4
(22) Anmeldetag: 04.10.2017
(51) Int. Cl.: F02M 21/02, F02M 43/04

(54) **BRENNSTOFFEINSPRITZVENTIL ZUM EINSPRITZEN EINES GASFÖRMIGEN UND/ODER FLÜSSIGEN BRENNSTOFFS**
FUEL INJECTION VALVE FOR INJECTING A GASEOUS AND / OR LIQUID FUEL
SOUPAPE D'INJECTION DE CARBURANT POUR INJECTER UN CARBURANT GAZEUX ET / OU LIQUIDE

(30) Priorität: 03.11.2016 DE 102016221547
(43) Veröffentlichungstag der Anmeldung: 11.09.2019
(73) Patentinhaber: Robert Bosch GmbH, 70442 Stuttgart (DE)
(72) Erfinder: LEIBSSLE, Benedikt, 70191 Stuttgart (DE)
(86) Internationale Anmeldenummer: PCT/EP2017/075118
(87) Internationale Veröffentlichungsnummer: WO 2018/082855

(56) Entgegenhaltungen:
- EP-A2- 1 584 813
- DE-A1-102014 225 167
- US-A1- 2002 070 295

## Beschreibung

Die Erfindung betrifft ein Brennstoffeinspritzventil zum Einspritzen eines gasförmigen und/oder flüssigen Brennstoffs in einen Brennraum einer Brennkraftmaschine mit den Merkmalen des Oberbegriffs des Anspruchs 1. Derartige Brennstoffeinspritzventile sind auch als Doppelbrennstoffinjektoren, Zweistoffinjektoren oder Dual-Fuel-Injektoren bekannt.

### Stand der Technik

Brennstoffeinspritzventile der vorstehend genannten Art weisen in der Regel zwei ineinander geführte hubbewegliche Düsennadeln zum Freigeben und Verschließen von Einspritzöffnungen für die unterschiedlichen Brennstoffe auf. Die Ansteuerung ist vergleichsweise aufwendig, da für jede Düsennadel ein Steuerventil vorhanden sein muss. Ferner müssen beide Steuerventile zeitlich genau aufeinander abgestimmt sein.

Aus der Offenlegungsschrift DE 10 2014 225 167 A1 ist ein Kraftstoffzumessventil für eine Brennkraftmaschine mit einem Gehäuse bekannt, in dem eine Düsennadel längsverschiebbar angeordnet ist, die mit einem im Gehäuse ausgebildeten Dichtsitz zusammenwirkt. Im Gehäuse ist ferner ein Gasraum ausgebildet, der die Düsennadel abschnittsweise umgibt und der durch das Öffnen des Dichtsitzes mit wenigstens einer Eindüsöffnung verbindbar ist. Weiterhin ist ein mit flüssigem Kraftstoff befüllbarer Raum vorhanden, der dem Gasraum abgewandt die Düsennadel umgibt. Zur Vereinfachung der Ansteuerung wird vorgeschlagen, den flüssigen und den gasförmigen Kraftstoff in einem einzigen Vorgang in den Brennraum einzubringen. Hierzu wird eine Leckage des flüssigen Kraftstoffs in den Gasraum über einen Leckagespalt zugelassen, so dass beim Öffnen der Düsennadel Gas aus dem Gasraum über die Einspritzöffnungen in einen Brennraum strömt und dabei den innerhalb des Gasraums vorhandenen flüssigen Kraftstoff mitreißt. Der Leckagespalt ist dabei derart bemessen, dass durch die Eindüsung des gasförmigen Kraftstoffs eine solche Menge an flüssigem Kraftstoff in den Brennraum gelangt, dass die Zündfähigkeit des Gemisches auf das gewünschte Maß angehoben wird. Um bei Bedarf eine größere Menge des flüssigen Kraftstoffs in den Brennraum einzubringen, ist eine weitere Düsennadel vorgesehen, die in einer Bohrung der ersten Düsennadel zum Freigeben und Verschließen mindestens einer weiteren Einspritzöffnung hubbeweglich geführt ist. Zur Steuerung der Hubbewegungen der beiden Düsennadeln ist jeweils ein Steuerventil vorgesehen, so dass die Ansteuerung des Kraftstoffzumessventils nicht minder komplex als bei einem herkömmlichen Dual-Fuel-Injektor ist.

Die Steuerventile dienen der hydraulischen Vorsteuerung der koaxial angeordneten Düsennadeln. Jeder Düsennadel ist hierzu ein Steuerraum zugeordnet, der über ein Steuerventil entlastbar ist, so dass ein an der Düsennadel anliegender Steuerdruck gesenkt wird und die jeweilige Düsennadel zu öffnen vermag. Die bei der hydraulischen Vorsteuerung anfallende Absteuermenge vergrößert sich mit zunehmendem Hub der Düsennadel und/oder mit zunehmendem Durchmesser des Steuerraums. Das heißt, dass sie bei der äußeren Düsennadel prinzipbedingt besonders groß ist. Die Absteuermenge beeinflusst dabei direkt die Dimensionierung des zugeordneten Steuerventils, wobei bei gleichbleibendem Ventiltyp die Regel gilt: je größer die Absteuermenge, desto größer baut das Steuerventil. Der zur Verfügung stehende Bauraum ist jedoch in der Regel begrenzt. Ein weiteres Beispiel ist aus EP 1 584 813 bekannt.

Der vorliegenden Erfindung liegt daher die Aufgabe zugrunde, ein Brennstoffeinspritzventil zum Einspritzen eines gasförmigen und/oder flüssigen Brennstoffs in einen Brennraum einer Brennkraftmaschine anzugeben, das mittels Steuerventile derart ansteuerbar ist, dass die Ventilanforderungen, insbesondere im Hinblick auf die Anordnung und/oder den Bauraumbedarf der Steuerventile, selbst bei großen Absteuermengen geringgehalten werden können.

Zur Lösung der Aufgabe wird das Brennstoffeinspritzventil mit den Merkmalen des Anspruchs 1 angegeben. Vorteilhafte Weiterbildungen der Erfindung sind den Unteransprüchen zu entnehmen.

### Offenbarung der Erfindung

Das zum Einspritzen eines gasförmigen und/oder flüssigen Brennstoffs in einen Brennraum einer Brennkraftmaschine vorgeschlagene Brennstoffeinspritzventil umfasst ein in einer zentralen Bohrung eines Düsenkörpers hubbeweglich aufgenommenes erstes Ventilglied und ein in einer zentralen Bohrung des ersten Ventilglieds hubbeweglich aufgenommenes zweites Ventilglied sowie Steuerventile zur hydraulischen Vorsteuerung der beiden Ventilglieder. Jedem Ventilglied ist ein Steuerraum zugeordnet, der über ein Steuerventil entlastbar ist. Erfindungsgemäß ist zumindest zwischen einem Steuerraum und einem der Entlastung des Steuerraums dienendem Steuerventil ein weiteres Ventil angeordnet, das über das Steuerventil hydraulisch steuerbar ist.

Das heißt, dass bei dem erfindungsgemäßen Brennstoffeinspritzventil mindestens ein Steuerraum lediglich mittelbar über das ihm zugeordnete Steuerventil entlastbar ist, da zwischen dem Steuerraum und dem Steuerventil ein weiteres Ventil angeordnet ist, das zur Entlastung des Steuerraums geöffnet werden muss. Das Öffnen des weiteren Ventils erfolgt mittels des Steuerventils. Für die Auslegung des Steuerventils sind demnach die konkrete Ausgestaltung und die Lage des weiteren Ventils entscheidend und nicht mehr das Volumen des Steuerraums, den es über das weitere Ventil zu entlasten gilt. Das weitere Ventil besitzt den Vorteil, dass es vergleichsweise einfach gestaltet und nah am Steuerventil angeordnet sein kann. Entsprechend kann ein vergleichsweise klein bauendes Steuerventil zur Steuerung des weiteren Ventils eingesetzt werden.

Da bei koaxial angeordneten Ventilgliedern das äußere Ventilglied in der Regel einen größeren Durchmesser als das innere Ventilglied besitzt, weist auch der dem äußeren Ventilglied zugeordnete Steuerraum ein größeres Volumen als der dem inneren Ventilglied zugeordnete Steuerraum auf. Das erfindungsgemäß vorgeschlagene weitere Ventil dient daher bevorzugt der Entlastung des dem äußeren Ventilglied zugeordneten Steuerraums.

Zur hydraulischen Steuerung des weiteren Ventils ist ein weiterer Steuerraumvorhanden, der durch ein Betätigungselement zur Betätigung eines Schließelements des weiteren Ventils begrenzt wird. Über das Betätigungselement des weiteren Ventils kann in einfacher Weise eine Distanz zwischen dem Steuerraum und dem Steuerventil überbrückt werden. Die Entfernung des Steuerventils zum Steuerraum hat dabei keine Auswirkungen auf die Absteuermenge, so dass das Steuerventil auch in einem axialen Abstand hinter dem anderen Steuerventil angeordnet werden kann. Das heißt, dass abweichend von der üblichen parallelen Anordnung der beiden Steuerventile auch eine Anordnung realisierbar ist, bei der die Steuerventile hintereinanderliegen.

Da es eine Distanz zu überbrücken gilt, ist vorzugsweise das Betätigungselement des weiteren Ventils stangen- oder kolbenförmig gestaltet. Das Schließelement kann insbesondere als Kugel ausgeführt sein. Zur Führung des kugelförmigen Schließelements kann in einer dem Schließelement zugewandten Stirnfläche des Betätigungselements eine sphärische Ausnehmung ausgebildet sein.

Das weitere Ventil ist dabei erfindungsgemäß als 2/2-Wege-Ventil, beispielsweise als Kugelsitzventil, ausgeführt, so dass sich das weitere Ventil besonders einfach und zudem bauraumschonend umsetzen lässt.

Bevorzugt wird vorgeschlagen, dass der Steuerraum, der dem ersten, d. h. dem äußeren Ventilglied zugeordnet ist, von einer Drosselplatte begrenzt wird, in der eine Zulaufdrossel und eine Ablaufdrossel ausgebildet ist, welche mit dem Steuerraum verbunden sind. Über die Zulaufdrossel ist der Steuerraum mit einem Fluid, vorzugsweise mit dem flüssigen Brennstoff, befüllbar, um den Steuerdruck im Steuerraum anzuheben. Über die Ablaufdrossel erfolgt die Entlastung des Steuerraums, wenn das weitere Ventil geöffnet ist. Die Ablaufdrossel ist vorzugsweise in einem Ablaufkanal angeordnet, der in einen Ventilsitz für das weitere Ventil mündet. Das weitere Ventil ist demnach nur durch die Drosselplatte von dem Steuerraum getrennt, was eine steuerraumnahe Anordnung des weiteren Ventils ermöglicht.

Ferner bevorzugt ist der Steuerraum, der dem ersten bzw. äußeren Ventilglied zugeordnet ist, über die Zulaufdrossel und/oder einen Zulaufkanal mit einem Federraum verbunden, in dem zumindest eine Feder zur Vorspannung eines Ventilglieds in Richtung eines Dichtsitzes aufgenommen ist. Der Federraum kann auf diese Weise als Fluidreservoir zur Befüllung des Steuerraums genutzt werden. Als Fluid dient vorzugsweise der flüssige Brennstoff.

Der Steuerraum, der dem zweiten bzw. dem inneren Ventilglied zugeordnet ist, wird vorzugsweise von einer Dichthülse begrenzt, in der ein Endabschnitt des zweiten Ventilglieds hubbeweglich aufgenommen ist. Die Dichthülse dichtet den Steuerraum nach außen ab. Weiterhin vorzugsweise ist die Dichthülse im Federraum angeordnet und durch eine der im Federraum aufgenommenen Federn axial vorgespannt. Die axiale Vorspannung stellt die Dichtwirkung der Dichthülse sicher. Bevorzugt wird die Dichthülse über die Feder gegen ein Körperbauteil des Brennstoffeinspritzventils gedrückt, so dass das Körperbauteil, die Dichthülse und das zweite bzw. innere Ventilglied den Steuerraum umschließen.

Vorteilhafterweise ist mindestens ein Steuerventil als 3/2-Wege-Ventil ausgeführt. Öffnet das 3/2-Wege-Ventil, um unmittelbar oder mittelbar über das weitere Ventil einen den Ventilgliedern zugeordneten Steuerraum zu entlasten, wird die Zulaufdrossel blockiert und der Zustrom von Fluid in den Steuerraum unterbrochen. Da bei geöffnetem Steuerventil keine Menge in den Steuerraum nachströmt, verringert sich zugleich die Absteuermenge. Die Ventilanforderungen können demnach weiter gesenkt werden.

Das zwischen einem Steuerraum und einem Steuerventil angeordnete weitere Ventil führt zu einer kaskadenartigen hydraulischen Vorsteuerung des dem Steuerraum zugeordneten Ventilglieds. Im Vergleich zur elektrischen Aktorkraft eines herkömmlichen Steuerventils kann durch die Kaskadensteuerung ein Kraftüberschuss erzielt werden, der dazu genutzt werden kann, den Steuerraum über größere Querschnitte zu entlasten. Dies wiederum führt zu einem schnellen Öffnungs- und Schließverhalten des zugeordneten Ventilglieds.

Die kaskadenartige Vorsteuerung ermöglicht zudem eine Positionierung des Steuerventils in einer gewissen Entfernung zum Steuerraum, und zwar ohne bedeutende Defizite bei der Schaltdynamik, da die Steuerleitungen kurzgehalten werden können.

In Abhängigkeit von den jeweiligen Bauraumanforderungen können die Steuerventile nebeneinander- oder hintereinanderliegend angeordnet sein. Die hintereinanderliegende Anordnung ermöglicht neue, schlanke Bauformen und damit eine verbesserte Motorkompatibilität. Insbesondere kann die axiale Abmessung bzw. die Länge des Betätigungselements des weiteren Ventils derart gewählt werden, das die Entfernung des Steuerventils zum Steuerraum optimal überbrückt wird. In der Folge verringert sich die Länge der zugehörigen Steuerleitungen.

Gemäß einer bevorzugten Ausführungsform der Erfindung sind die Steuerventile jeweils über einen elektrischen, insbesondere einen elektromagnetischen oder piezoelektrischen, Aktor betätigbar. Das heißt, dass jedem Steuerventil ein Magnetaktor oder eine Piezoaktor zugeordnet ist. Auf diese Weise sind beide Steuerventile unabhängig voneinander steuerbar.

Des Weiteren wird vorgeschlagen, dass der Düsenkörper mit wenigstens einem weiteren Körperbauteil und/oder der Drosselplatte über eine Düsenspannmutter axial verspannt ist. Die axiale Verspannung bewirkt eine Dichtkraft, welche die erforderliche Abdichtung der brennstoffführenden Räume nach außen gewährleistet. Ferner wirkt die axiale Vorspannung einer internen Leckage und damit einer Vermischung der unterschiedlichen Brennstoffe entgegen.

Bevorzugte Ausführungsformen der Erfindung werden nachfolgend anhand der beigefügten Zeichnungen näher erläutert. Diese zeigen:
Fig. 1 einen schematischen Längsschnitt durch ein erfindungsgemäßes Brennstoffeinspritzventil gemäß einer ersten bevorzugten Ausführungsform,
Fig. 2 einen vergrößerten Ausschnitt der Fig. 1 im Bereich des weiteren Ventils und
Fig. 3 einen schematischen Längsschnitt durch ein erfindungsgemäßes Brennstoffeinspritzventil gemäß einer zweiten bevorzugten Ausführungsform.

### Ausführliche Beschreibung der Zeichnungen

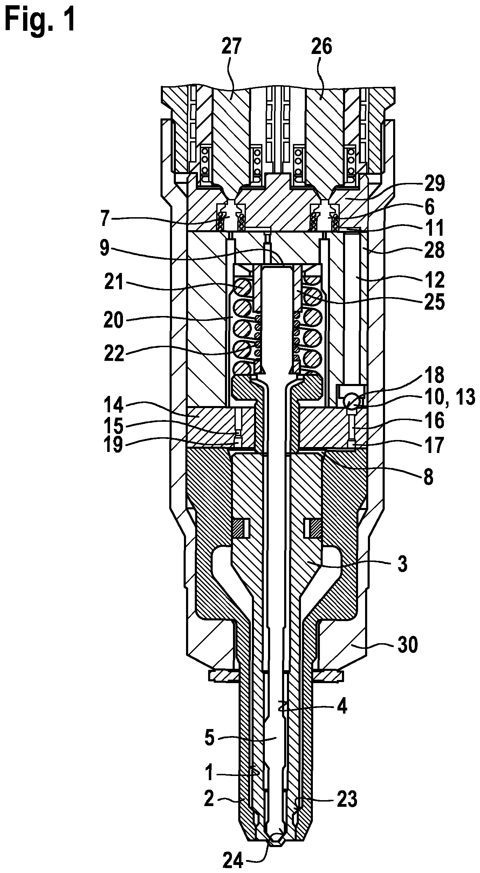

Das in der Fig. 1 dargestellte Brennstoffeinspritzventil zum Einspritzen eines gasförmigen und/oder flüssigen Brennstoffs in einen Brennraum einer Brennkraftmaschine umfasst einen Düsenkörper 2 mit einer zentralen Bohrung 1, in der ein erstes Ventilglied 3 hubbeweglich aufgenommen ist. Das erste Ventilglied 3 weist ebenfalls eine zentrale Bohrung 4 auf. In dieser ist ein zweites Ventilglied 5 hubbeweglich geführt. Die zentrale Bohrung 4 des ersten Ventilglieds 3 ist mit flüssigem Brennstoff beaufschlagbar und die zentrale Bohrung 1 des Düsenkörpers 2 ist mit gasförmigem Brennstoff beaufschlagbar. Über eine Hubbewegung des ersten Ventilglieds 3 ist demnach der gasförmige Brennstoff in den Brennraum einbringbar, während die Einspritzung des flüssigen Brennstoffs über eine Hubbewegung des zweiten Ventilglieds 5 bewirkt wird.

Das erste Ventilglied 3 wirkt mit einem ersten Dichtsitz 23 zusammen, der durch den Düsenkörper 2 ausgebildet wird. Hebt das erste Ventilglied 3 vom Dichtsitz 23 ab, gibt es Einspritzöffnungen (nicht dargestellt) frei, über den der gasförmige Brennstoff in den Brennraum eingebracht wird.

Das zweite Ventilglied 5 wirkt mit einem Dichtsitz 24 zusammen, der im ersten Ventilglied 3 ausgebildet ist. Hebt das zweite Ventilglied 5 vom Dichtsitz 24 ab, werden im ersten Ventilglied 3 ausgebildete Einspritzöffnungen (nicht dargestellt) zur Einspritzung des flüssigen Brennstoffs freigegeben.

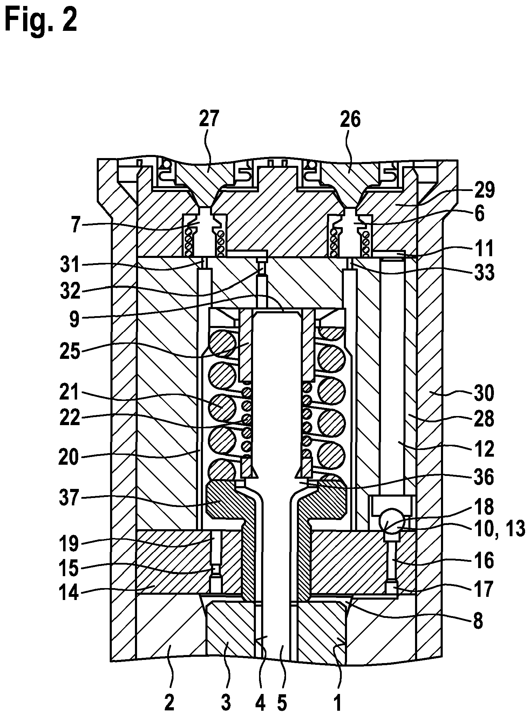

Jedem Ventilglied 3, 5 ist ein Steuerraum 8, 9 zugeordnet, wobei jeder Steuerraum 8, 9 über ein eigenes Steuerventil 6, 7 entlastbar ist. Bei einer Entlastung sinkt der Steuerdruck im Steuerraum 8, 9 und das jeweilige Ventilglied 3, 5 vermag entgegen der Federkraft einer Feder 21, 22, mittels welcher das Ventilglied 3, 5 gegen den Dichtsitz 23, 24 axial vorgespannt ist, zu öffnen. Die Federn 21, 22 sind in einem Federraum 20 aufgenommen, der in einem Körperbauteil 28 ausgebildet ist (siehe Fig. 2). Die Federn 21, 22 sind koaxial angeordnet und umgeben einen in den Federraum 20 hineinragenden Endabschnitt des zweiten bzw. inneren Ventilglieds 5. Die Feder 22 ist dabei einerseits unmittelbar an einem Ringbund 36 des zweiten bzw. inneren Ventilglieds 5 und andererseits an einer Dichthülse 25 abgestützt, die gemeinsam mit dem Ventilglied 5 und dem Körperbauteil 28 den Steuerraum 9 begrenzt. Die weitere Feder 21 ist mittelbar über eine Bundhülse 37 an dem ersten bzw. äußeren Ventilglied 3 abgestützt, wobei die Bundhülse 37 durch eine Drosselplatte 14 hindurchgeführt ist, die zwischen dem Düsenkörper 2 und dem Körperbauteil 28 angeordnet ist. Die Drosselplatte 14, der Düsenkörper 2, das erste (äußere) Ventilglied 3 und die Bundhülse 37 begrenzen gemeinsam den Steuerraum 8. Dieser ist über eine in einem Ablaufkanal 17 ausgebildete Ablaufdrossel 16 entlastbar und über eine in einem Zulaufkanal 19 ausgebildete Zulaufdrossel 15 mit flüssigem Brennstoff beaufschlagbar, so dass auf dem Ventilglied 3 ein wechselnder Steuerdruck lastet.

Zum Entlasten des Steuerraums 8 wird das Steuerventil 6 geöffnet. Dies hat zur Folge, dass zunächst der Steuerdruck in einem Steuerraum 11 sinkt, der an einem stangenförmigen Betätigungselement 12 eines weiteren Ventils 10 mit einem kugelförmigen Schließelement 13 anliegt. Das Schließelement 13 wirkt mit einem Ventilsitz 18 zusammen, der in der Drosselplatte 14 ausgebildet ist, so dass der Ablaufkanal 17 in den Ventilsitz 18 mündet. Der sinkende Steuerdruck im Steuerraum 11 bewirkt, dass das als Kugelsitzventil ausgebildete weitere Ventil 10 öffnet und den Ablaufkanal 17 freigibt. Der Steuerraum 8 wird entlastet und das erste (äußere) Ventilglied 3 vermag entgegen der Federkraft der Feder 21 zu öffnen, um gasförmigen Brennstoff in den Brennraum einzublasen.

Um das Einblasen von gasförmigem Brennstoff in den Brennraum zu beenden, wird das Steuerventil 6 wieder geschlossen, so dass über eine Zulaufdrossel 33 flüssiger Brennstoff in den Steuerraum 11 strömt. In der Folge steigt der Steuerdruck im Steuerraum 11 an, wodurch das Betätigungselement 12 nach unten gedrückt wird. Dabei stellt das Betätigungselement 12 das kugelförmige Schließelement 13 in den Ventilsitz 18. Das weitere Ventil 10 schließt und der Steuerdruck im Steuerraum 8 steigt an. Dies wiederum führt zum Schließen des ersten (äußeren) Ventilglieds 3.

Im Anwendungsfall Gasbetrieb wird vor jeder Gaseinblasung eine Pilotmenge des flüssigen Brennstoffs, wobei es sich vorzugsweise um Dieselkraftstoff handelt, in den Brennraum eingespritzt. Der flüssige Brennstoff heizt den Brennraum vor und gewährleistet auf diese Weise die erforderliche Entzündungstemperatur des gasförmigen Brennstoffs. Zum Einspritzen des flüssigen Brennstoffs muss das zweite (innere) Ventilglied 5 betätigt werden. Hierzu wird das Steuerventil 7 geöffnet, das gemeinsam mit dem Steuerventil 6 in einem an das Körperbauteil 28 angrenzenden und mit diesem über eine Düsenspannmutter 30 verspannten weiteren Körperbauteil 29 angeordnet ist. Öffnet das Steuerventil 7, wird über eine Ablaufdrossel 32 eine Entlastung des Steuerraums 9 bewirkt. Da das Steuerventil 7, wie auch das Steuerventil 6, als 3/2-WegeVentil ausgebildet ist, wird zugleich der Zustrom von flüssigem Kraftstoff in den Steuerraum 9 über eine Zulaufdrossel 31 blockiert. Der Steuerdruck im Steuerraum 9 fällt ab und das Ventilglied 5 vermag entgegen der Federkraft der Feder 22 zu öffnen. Soll die Einspritzung von flüssigem Brennstoff beendet werden, wird das Steuerventil 9 geschlossen, so dass der Steuerdruck im Steuerraum 9 wieder ansteigt und das Ventilglied 5 in den Dichtsitz 24 zurückstellt.

Da das Steuerventil 7 nah am Steuerraum 9 angeordnet ist, kann die Vorsteuerung des Ventilglieds 5 unmittelbar mittels des Steuerventils 7 bewirkt werden. Das heißt, dass ein weiteres Ventil 10, das zwischen dem Steuerraum 8 und dem Steuerventil 6 vorgesehen ist und der Distanzüberbrückung dient, entbehrlich ist. Eine kaskadenartige Vorsteuerung ist lediglich für das erste bzw. äußere Ventilglied 3 vorgesehen.

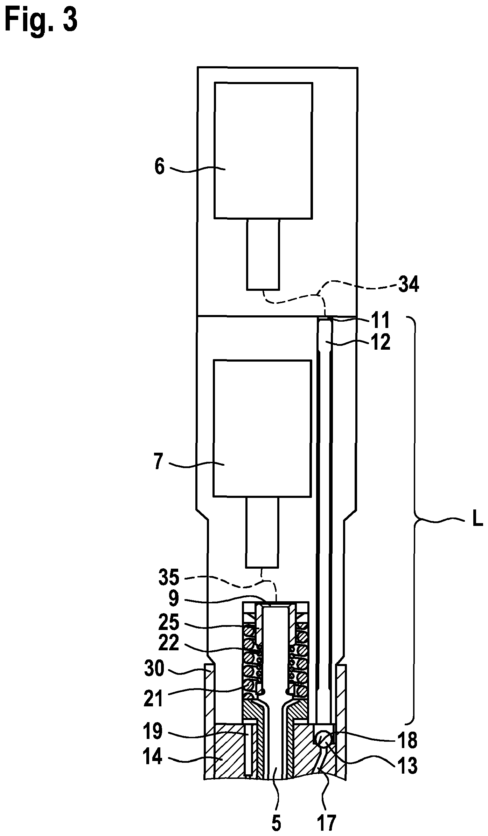

Durch die kaskadenartige Vorsteuerung lassen sich zudem neue, schlanke Brennstoffeinspritzventile realisieren, wie beispielhaft in der Fig. 3 dargestellt. Hier sind die Steuerventile 6, 7 nicht nebeneinander-, sondern hintereinanderliegend angeordnet. Durch Vorsehen des weiteren Ventils 10 und eine Anpassung der Länge L des Betätigungselements 12 können weiterhin kurze Steuerleitungen 34, 35 und kleine Absteuermengen realisiert werden.

Unabhängig von der jeweiligen Anordnung der Steuerventile 6, 7 ist vorzugsweise jedem Steuerventil 6, 7 ein Aktor 26, 27 zugeordnet, so dass beide Ventilglieder 3, 5 unabhängig voneinander ansteuerbar sind. In den vorliegend dargestellten Ausführungsbeispielen sind die Aktoren 26, 27 als Piezoaktoren ausgebildet. Es können jedoch auch andere Aktoren 26, 27, beispielsweise Magnetaktoren, verwendet werden.

## Patentansprüche

1. Brennstoffeinspritzventil zum Einspritzen eines gasförmigen und/oder flüssigen Brennstoffs in einen Brennraum einer Brennkraftmaschine, umfassend ein in einer zentralen Bohrung (1) eines Düsenkörpers (2) hubbeweglich aufgenommenes erstes Ventilglied (3) und ein in einer zentralen Bohrung (4) des ersten Ventilglieds (3) hubbeweglich aufgenommenes zweites Ventilglied (5) sowie Steuerventile (6, 7) zur hydraulischen Vorsteuerung der beiden Ventilglieder (3, 5), wobei jedem Ventilglied (3, 5) ein Steuerraum (8, 9) zugeordnet ist, der über ein Steuerventil (6, 7) entlastbar ist,
wobei zwischen einem Steuerraum (8) und einem der Entlastung des Steuerraums (8) dienendem Steuerventil (6) ein weiteres Ventil (10) angeordnet ist, das über das Steuerventil (6) hydraulisch steuerbar ist,
**dadurch gekennzeichnet,**
**dass** zur hydraulischen Steuerung des weiteren Ventils (10) ein weiterer Steuerraum (11) vorgesehen ist, der durch ein Betätigungselement (12) zur Betätigung eines Schließelements (13) des weiteren Ventils (10) begrenzt wird, und dass das weitere Ventil (10) als 2/2-Wege-Ventil, beispielsweise als Kugelsitzventil, ausgeführt ist.

2. Brennstoffeinspritzventil nach Anspruch 1
**dadurch gekennzeichnet, dass** der Steuerraum (8), der dem ersten Ventilglied (3) zugeordnet ist, von einer Drosselplatte (14) begrenzt wird, in der eine Zulaufdrossel (15) und eine Ablaufdrossel (16) ausgebildet sind, welche mit dem Steuerraum (8) verbunden sind, wobei vorzugsweise die Ablaufdrossel (16) in einem Ablaufkanal (17) angeordnet ist, der in einen Ventilsitz (18) für das weitere Ventil (10) mündet.

3. Brennstoffeinspritzventil nach einem der vorhergehenden Ansprüche,
**dadurch gekennzeichnet, dass** der Steuerraum (8), der dem ersten Ventilglied (3) zugeordnet ist, über die Zulaufdrossel (15) und/oder einen Zulaufkanal (19) mit einem Federraum (20) verbunden ist, in dem zumindest eine Feder (21, 22) zur Vorspannung eines Ventilglieds (3, 5) in Richtung eines Dichtsitzes (23, 24) aufgenommen ist.

4. Brennstoffeinspritzventil nach einem der vorhergehenden Ansprüche,
**dadurch gekennzeichnet, dass** der Steuerraum (9), der dem zweiten Ventilglied (5) zugeordnet ist, von einer Dichthülse (25) begrenzt wird, in der ein Endabschnitt des zweiten Ventilglieds (5) hubbeweglich aufgenommen ist, wobei vorzugsweise die Dichthülse (25) im Federraum (20) aufgenommen und durch die Federn (22) axial vorgespannt ist.

5. Brennstoffeinspritzventil nach einem der vorhergehenden Ansprüche,
**dadurch gekennzeichnet, dass** mindestens ein Steuerventil (6, 7) als 3/2-WegeVentil ausgeführt ist.

6. Brennstoffeinspritzventil nach einem der vorhergehenden Ansprüche,
**dadurch gekennzeichnet, dass** die Steuerventile (6, 7) nebeneinander- oder hintereinanderliegend angeordnet sind.

7. Brennstoffeinspritzventil nach einem der vorhergehenden Ansprüche,
**dadurch gekennzeichnet, dass** die Steuerventile (6, 7) jeweils über einen elektrischen, insbesondere einen elektromagnetischen oder piezoelektrischen, Aktor (26, 27) betätigbar sind.

8. Brennstoffeinspritzventil nach einem der vorhergehenden Ansprüche,
**dadurch gekennzeichnet, dass** der Düsenkörper (2) mit wenigstens einem weiteren Körperbauteil (28, 29) und/oder der Drosselplatte (14) über eine Düsenspannmutter (30) axial verspannt ist.

## Claims

1. Fuel injection valve for injecting a gaseous and/or liquid fuel into a combustion chamber of an internal combustion engine, comprising a first valve member (3) which is received in a central bore (1) of a nozzle body (2) so as to perform a reciprocating movement, and a second valve member (5) which is received in a central bore (4) of the first valve member (3) so as to perform a reciprocating movement, and control valves (6, 7) for hydraulic feedforward control of the two valve members (3, 5), wherein each valve member (3, 5) is assigned a control space (8, 9) which is able to be relieved by way of a control valve (6, 7);
wherein a further valve (10) which is able to be hydraulically controlled by way of the control valve (6) is disposed between a control space (8) and a control valve (6) that serves for relieving the control space (8),
**characterized in that**
provided for the hydraulic control of the further valve (10) is a further control space (11) which is delimited by an activating element (12) for activating a closing element (13) of the further valve (10), and **in that** the further valve (10) is embodied as a 2/2-way valve, for example as a ball-seated valve.

2. Fuel injection valve according to Claim 1, **characterized in that** the control space (8) that is assigned to the first valve member (3) is delimited by a throttle plate (14) in which are configured an inflow throttle (15) and an outflow throttle (16) that are connected to the control space (8), wherein the outflow throttle (16) is preferably disposed in an outflow channel (17) which opens into a valve seat (18) for the further valve (10).

3. Fuel injection valve according to one of the preceding claims,
**characterized in that** the control space (8) that is assigned to the first valve member (3) by way of the inflow throttle (15) and/or an inflow channel (19) is connected to a spring space (20) in which is received at least one spring (21, 22) for pretensioning a valve member (3, 5) in the direction of a seal seat (23, 24).

4. Fuel injection valve according to one of the preceding claims,
**characterized in that** the control space (9) that is assigned to the second valve member (5) is delimited by a sealing sleeve (25) in which an end portion of the second valve member (5) is received so as to perform a reciprocating movement, wherein the sealing sleeve (25) is preferably received in the spring space (20) and is axially pretensioned by the springs (22).

5. Fuel injection valve according to one of the preceding claims,
**characterized in that** at least one control valve (6, 7) is embodied as a 3/2-way valve.

6. Fuel injection valve according to one of the preceding claims,
**characterized in that** the control valves (6, 7) are disposed so as to lie next to one another or behind one another.

7. Fuel injection valve according to one of the preceding claims,
**characterized in that** the control valves (6, 7) each are activatable by way of an electric, in particular an electromagnetic or piezoelectric, actuator (26, 27) .

8. Fuel injection valve according to one of the preceding claims,
**characterized in that** the nozzle body (2) by way of a nozzle clamping nut (30) is axially braced with at least one further body component (28, 29) and/or the throttle plate (14).

## Revendications

1. Soupape d'injection de carburant pour l'injection d'un carburant gazeux et/ou liquide dans une chambre de combustion d'un moteur à combustion interne, comprenant un premier organe de soupape (3) reçu de manière à pouvoir effectuer une course dans un alésage central (1) d'un corps de buse (2) et un deuxième organe de soupape (5) reçu de manière à pouvoir effectuer une course dans un alésage central (4) du premier organe de soupape (3) ainsi que des soupapes de commande (6, 7) pour la pré-commande hydraulique des deux organes de soupape (3, 5), une chambre de commande (8, 9) étant associée à chaque organe de soupape (3, 5), laquelle peut être déchargée par l'intermédiaire d'une soupape de commande (6, 7),
une autre soupape (10) étant agencée entre une chambre de commande (8) et une soupape de commande (6) servant à décharger la chambre de commande (8), laquelle peut être commandée hydrauliquement par l'intermédiaire de la soupape de commande (6),
**caractérisée en ce que**
pour la commande hydraulique de l'autre soupape (10), une autre chambre de commande (11) est prévue, qui est délimitée par un élément d'actionnement (12) pour l'actionnement d'un élément de fermeture (13) de l'autre soupape (10), et **en ce que** l'autre soupape (10) est réalisée sous forme de soupape à 2/2 voies, par exemple sous forme de soupape à siège sphérique.

2. Soupape d'injection de carburant selon la revendication 1, **caractérisée en ce que** la chambre de commande (8) associée au premier organe de soupape (3) est délimitée par une plaque d'étranglement (14) dans laquelle sont formés un étranglement d'entrée (15) et un étranglement de sortie (16) qui sont reliés à la chambre de commande (8), l'étranglement de sortie (16) étant de préférence agencé dans un canal de sortie (17) qui débouche dans un siège de soupape (18) pour l'autre soupape (10).

3. Soupape d'injection de carburant selon l'une quelconque des revendications précédentes, **caractérisée en ce que** la chambre de commande (8) associée au premier organe de soupape (3) est reliée, par l'intermédiaire de l'étranglement d'entrée (15) et/ou d'un canal d'entrée (19), à une chambre à ressort (20) dans laquelle est reçu au moins un ressort (21, 22) pour précontraindre un organe de soupape (3, 5) en direction d'un siège d'étanchéité (23, 24).

4. Soupape d'injection de carburant selon l'une quelconque des revendications précédentes, **caractérisée en ce que** la chambre de commande (9) associée au deuxième organe de soupape (5) est délimitée par une douille d'étanchéité (25) dans laquelle une section d'extrémité du deuxième organe de soupape (5) est reçue de manière à pouvoir effectuer une course, la douille d'étanchéité (25) étant de préférence reçue dans la chambre à ressort (20) et précontrainte axialement par les ressorts (22).

5. Soupape d'injection de carburant selon l'une quelconque des revendications précédentes, **caractérisée en ce qu'**au moins une soupape de commande (6, 7) est réalisée sous forme de soupape à 3/2 voies.

6. Soupape d'injection de carburant selon l'une quelconque des revendications précédentes, **caractérisée en ce que** les soupapes de commande (6, 7) sont agencées côte à côte ou l'une derrière l'autre.

7. Soupape d'injection de carburant selon l'une quelconque des revendications précédentes, **caractérisée en ce que** les soupapes de commande (6, 7) peuvent être actionnées chacune par un actionneur électrique (26, 27), notamment un actionneur électromagnétique ou piézoélectrique.

8. Soupape d'injection de carburant selon l'une quelconque des revendications précédentes, **caractérisé en ce que** le corps de buse (2) est serré axialement avec au moins un autre composant de corps (28, 29) et/ou la plaque d'étranglement (14) par l'intermédiaire d'un écrou de serrage de buse (30).
